# EUROPÄISCHE PATENTANMELDUNG

(11) **EP 0 560 215 A1**
(43) Veröffentlichungstag der Anmeldung: **15.09.1993**
(21) Anmeldenummer: 93103517.4
(22) Anmeldetag: 05.03.1993
(51) Int. Cl.: B01D 24/30, B01D 33/00

(54) **Verfahren und Vorrichtung zur Filterung einer mit Schmutzteilchen befrachteten Flüssigkeit**

(30) Priorität: 12.03.1992 DE 4207888; 31.03.1992 DE 4210571
(71) Anmelder: Hompf, Dieter, D-91233 Neunkirchen a.S./Speikern (DE); Binzer, Ulrich, D-91241 Kirchensittenbach (DE)
(72) Erfinder: Hompf, Dieter, D-91233 Neunkirchen a.S./Speikern (DE); Binzer, Ulrich, D-91241 Kirchensittenbach (DE)
(74) Vertreter: LOUIS, PÖHLAU, LOHRENTZ & SEGETH

(57) **Zusammenfassung**

Es wird ein Verfahren und eine Vorrichtung zur Filterung einer mit Schmutzteilchen befrachteten Flüssigkeit beschrieben, wobei die befrachtete, verschmutzte Flüssigkeit durch eine Filterbettzone (12) in Aufwärtsrichtung durchgeleitet wird. Über der Filterbettzone (12) befindet sich in der Filtervorrichtung (10) folglich eine Reinflüssigkeitszone (16). In der Reinflüssigkeitszone (16) ist eine Waschvorrichtung (32) zum Waschen der mit Schmutzteilchen befrachteten Filterpartikel der Filterbettzone (12) vorgesehen. Die Waschvorrichtung (32) ist als Flotationsvorrichtung ausgebildet und zu diesem Zweck mit einer Begasungseinrichtung (54) verbunden, in der Reinigungsflüssigkeit feinstverteilt mit Gasblasen versetzt wird.

## Beschreibung

Die Erfindung betrifft ein Verfahren zur Filterung einer mit Schmutzteilchen befrachteten Flüssigkeit gemäß dem Oberbegriff des Anspruchs 1 sowie eine Vorrichtung zur Filterung einer mit Schmutzteilchen befrachteten Flüssigkeit gemäß dem Oberbegriff des Anspruchs 5.

Ein derartiges Verfahren und eine Vorrichtung zur Durchführung dieses Verfahrens ist aus der US-PS 47 20 347 bekannt. Dort wird Druckluft mittels eines Verteilers, der im Übergangsbereich von Filterbettzone und Reinflüssigkeitszone in der Reinflüssigkeitszone angeordnet ist, in die Waschvorrichtung gemeinsam mit einem Anteil gereinigter Flüssigkeit eingebracht, um die mit Schmutzteilchen befrachteten Filterpartikel zu reinigen. Es erfolgt also eine Strömung eines Anteils der Reinflüssigkeit von der Reinflüssigkeitszone weg in die Waschvorrichtung hinein, was einen Verlust an Reinflüssigkeit darstellt.

Die DD 241 695 offenbart ein Verfahren und eine Vorrichtung zur Rückspülung und Reinigung von Filterpartikeln in Anlagen zur Filtrierung von Flüssigkeiten. Dort wird Rückspülwasser zur Aufwirbelung des Filterbettes und zur Aufschwemmung der Filterrückstände sowie deren Austragung aus der Einrichtung benutzt und einer Mehrfachnutzung unterzogen. Hierzu wird das Rückspülwasser und Druckluft entgegengesetzt zur Filtrationksrichtung durch das Filterbett gedrückt. Als Rückspülflüssigkeit wird das in Filtrationsrichtung vor dem Filterbett anstehende und mit Filterrückständen durchsetzte Rohwasser entnommen, außerhalb der Einrichtung gereinigt, der Einrichtung jenseits des Filterbettes wieder zugeführt und so mehrfach im Kreislauf geführt. Das wird jedoch nicht kontinuierlich sondern diskontinuierlich durchgeführt, was nachteilig ist.

Aus der DE 27 08 340 C3 bzw. aus der zu dieser parallelen US 4 126 546 ist es bekannt, die mit Schmutzteilchen befrachteten Filterpartikel in einer Waschvorrichtung mit Reinflüssigkeit aus der Reinflüssigkeitszone der Filtervorrichtung zu waschen. Der Reinflüssigkeitsanteil zum Waschen der verschmutzten Filterpartikel liegt größenordnungsmäßig bei 10% der erzeugten Reinflüssigkeit und stellt somit einen erheblichen Verlust an Reinflüssigkeit dar.

Im DE-B Hermann H. Hahn: "Wassertechnologie - Fällung - Flockung - Separation", Springer-Verlag, 1987, Seiten 171 bis 173 sind diverse Filterverfahren zur Filterung einer mit Schmutzteilchen befrachteten Flüssigkeit schematisch erläutert, wobei u.a. auch eine kontinuierliche Gegenstromfiltration, ähnlich der in der oben zitierten DE 27 08 340 C3 offenbarten Gegenstromfiltration beschrieben wird.

Ein Sandsäulen-Schnellfilter mit Kreislaufwaschvorrichtung ist aus der DE-PS 593 364 bekannt. Dort ist ein Strahlrohr der Kreislaufwaschvorrichtung durch eine oberhalb einer Kiesfilterschicht angeordnete, auf einem Tragsieb liegende Entsäuerungsschicht mittels eines das Strahlrohr umgebenden, mit oberer trichterförmiger Erweiterung versehenen Rücklaufrohres für den gewaschenen Filterkies geführt. Diese Filtervorrichtung ist nicht zum kontinuierlichen Betrieb vorgesehen. Auch bei dieser bekannten Vorrichtung wird in der Waschvorrichtung Reinwasser aus der Reinflüssigkeitszone verwendet, so daß sich bzgl. des Reinwasser-Verbrauchs ähnliche Resultate ergeben wie bei der Vorrichtung gemäß der oben mehrfache erwähnten DE 27 08 340 C3.

Aus der DE 32 12 398 A1 ist eine dynamische Aufbereitungsvorrichtung bekannt, die ein Gefäß mit einem Bodenteil und einer sich nach oben erstreckenden Seitenwand aufweist, die einen Flüssigkeit enthaltenden Raum definiert. Einlaßmittel sind zur Zugabe eines zu schönenden Wasserstromes in das Gefäß vorgesehen. Abgabe-Auslaßmittel dienen zur Abgabe von geschöntem Wasser aus dem Gefäß. Ein sich bewegendes Schönungsbett ist im Gefäß mit einer teilweise kompaktierten Zone vorgesehen, durch die der zu schönende Strom während des Betriebes nach unten fließt, wobei die Kompaktierung des Bettes erhöht wird. Im Gefäß ist ein Gefäßring vorgesehen. Zirkulationsmittel innerhalb des Gefäßes dienen zum Zirkulieren des am meisten verschmutzten Teiles des Bettes von der kompaktierten Zone in den Ring, wobei die Zirkulationsmittel mindestens zum Teil Belüftungsmittel aufweisen, die im untersten Teil des Ringes angeordnet sind. Innerhalb des Gefäßes sind Mittel zur Rückführung von Teilen des sich bewegenden Bettes innerhalb des Ringes zur oberen Oberfläche der kompaktierten Bettzone nach dem Reinigen vorgesehen.

Gattungsgemäße Vorrichtungen bzw. Verfahren sind auch in der US 3 537 582 und in der US 3 667 604 beschrieben.

Der Erfindung liegt die Aufgabe zugrunde, ein Verfahren und eine Vorrichtung der eingangs genannten Art zu schaffen, die zum Waschen der mit Schmutzteilchen befrachteten Filterpartikel quasi keine Reinigungsflüssigkeit benötigt, sondern selbst in der Waschvorrichtung gleichsam als Abfallprodukt Reinflüssigkeit erzeugt.

Diese Aufgabe wird verfahrensgemäß durch die Merkmale des kennzeichnenden Teiles des Anspruchs 1 gelöst. Bevorzugte Weiterbildungen des erfindungsgemäßen Verfahrens sind in den Unteransprüchen 2 und 3 gekennzeichnet. Vorrichtungsgemäß wird die der vorliegenden Erfindung zugrundeliegende Aufgabe durch die Merkmale des kennzeichnenden Teiles des Anspruchs 4 gelöst. Bevorzugte Weiterbildungen der erfindungsgemäßen Filtervorrichtung sind in den Ansprüchen 5 bis 7 gekennzeichnet.

Beim erfindungsgemäßen Verfahren bzw. mit der erfindungsgemäßen Filtervorrichtung ergibt sich der Vorteil, daß zum Waschen der mit Schmutzteilchen befrachteten Filterpartikel des Filterbettes keine Reinflüssigkeit der über dem Filterbett befindlichen Reinflüssigkeitszone erforderlich ist, sondern daß die Reinigung der befrachteten Filterpartikel durch Ausnutzung des an sich bekannten Flotationsprinzipes durchgeführt wird, wobei in besonders vorteilhafter Weise bei der Flotation in der Waschvorrichtung außer dem Schlamm aus Schmutzteilchen, Gas und einem vernachlässigbar geringen Flüssigkeitsanteil Reinflüssigkeit erzeugt wird. Erfindungsgemäß erfolgt also keine Strömung von Reinflüssigkeit von der Reinflüssigkeitszone in die Waschvorrichtung hinein, sondern eine Strömung der in der Waschvorrichtung erzeugten Reinflüssigkeit aus der Waschvorrichtung in die Reinflüssigkeitszone nach unten. Diese Strömung wird insbes. auch durch die entsprechende Ausbildung der Vorrichtung, d.h. des Flotatschlamm-Spiegels und des Spiegels der Reinflüssigkeitszone gewährleistet, wenn der Flotatschlamm-Spiegel über dem Spiegel der Reinflüssigkeitszone liegt, so daß der entsprechende hydrostatische Druck zwischen diesen beiden Spiegeln dafür sorgt, daß die Strömung der in der Waschvorrichtung erzeugten Reinflüssigkeit in der erwähnten Weise nach unten in die Reinflüssigkeitszone hinein erfolgt. Im Vergleich mit den bekannten Filtervorrichtungen bzw. Verfahren zur Filterung einer mit Schmutzteilchen befrachteten Flüssigkeit ist erfindungsgemäß der Verlust an Flüssigkeit also nur durch seinen entsprechenden Anteil im Flotatschlamm gegeben und demzufolge vergleichsweise sehr gering, was besonders vorteilhaft ist.

Ein Ausführungsbeispiel der erfindungsgemäßen Filtervorrichtung zur Durchführung des erfindungsgemäßen Verfahrens ist in der Zeichnung dargestellt und wird nachfolgend beschrieben. Es zeigen:
- Fig. 1: schematisch in einer schnittdarstellung eine Filtervorrichtung mit über dem Filterbett in der Reinflüssigkeitszone angeordneter Waschvorrichtung, und
- Fig. 2: die Waschvorrichtung gemäß Fig. 1 in einem größeren Maßstab.

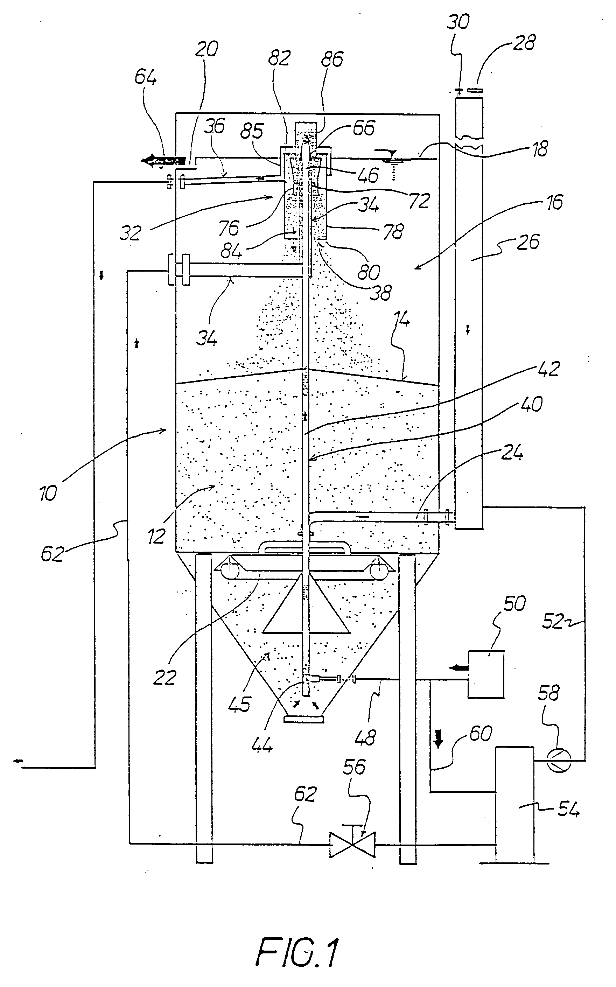

Fig. 1 zeigt eine Filtervorrichtung 10 mit einem Filterbett, d.h. mit einer Filterbettzone 12, deren Oberfläche mit der Bezugsziffer 14 bezeichnet ist. Über der Filterbettzone 12 befindet sich eine Reinflüssigkeitszone 16, deren Flüssigkeitsspiegel 18 durch einen Ablauf 20 für Reinflüssigkeit bestimmt ist.

In der Filterbettzone 12 befindet sich ein Einlaß 22 für mit Schmutzpartikel befrachtete Schmutzflüssigkeit, der mittels einer Rohrleitung 24 mit einem Sammler 26 verbunden ist. Der Sammler 26 weist einen Zulauf 28 für zu reinigende Schmutzflüssigkeit und in der Nachbarschaft dieses Zulaufes 28 eine Entlüftung 30 auf.

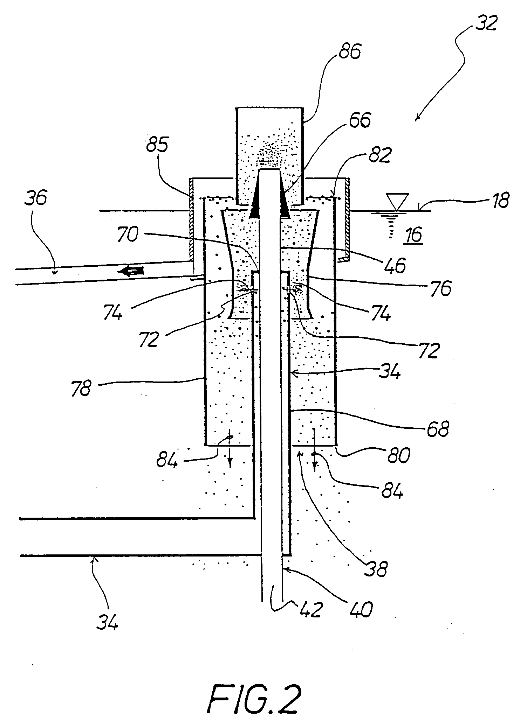

In der Reinflüssigkeitszone 16 ist eine Waschvorrichtung 32 vorgesehen, die weiter unten in Verbindung mit Fig. 2 detailliert beschrieben wird. Die Waschvorrichtung 32 macht sich das Flotationsprinzip zunutze und weist einen Einlaß 34 für eine feinverteilt Gasblasen enthaltende Waschflüssigkeit, einen Auslaß 36 für Schlamm aus Schmutzteilchen, Gasblasen und einem geringen Flüssigkeitsanteil, sowie einen Auslaß 38 für von den Schmutzteilchen gereinigte Filterpartikel auf. Die Waschvorrichtung 32 ist mit der Filterbettzone 12 mittels einer Fördereinrichtung 40 verbunden, die ein Förderrohr 42 aufweist, das mit seinem unteren Endabschnitt 44 in den unteren Endabschnitt 45 der Filterbettzone 12 hineinragt und das mit seinem oberen Endabschnitt 46 in die Waschvorrichtung 32 hineinsteht. An den unteren Endabschnitt 44 des Förderrohres 42 der Fördereinrichtung 40 ist mittels einer Rohrleitung 48, die einfach durch eine Linie angedeutet ist, eine Druckgasquelle 50 angeschlossen.

Bei dieser Druckgasquelle 50 kann es sich bspw. um einen Kompressor zum Verdichten der Umgebungsluft handeln. Die Druckgasquelle 50 kann auch von Druckgasflaschen gebildet sein. Mit Hilfe der Druckgasquelle 50 ist es möglich, mit Schmutzteilchen befrachtete Filterpartikel aus der Filterbettzone 12 durch das Förderrohr 42 der Fördereinrichtung 40 nach oben zur Waschvorrichtung 32 zu transportieren. Dieser Transport kann diskontinuierlich oder vorzugsweise kontinuierlich erfolgen.

Der Sammler 26 für Schmutzflüssigkeit ist mittels einer einfach durch eine Linie angedeutete Verbindungsrohrleitung 52 mit einer Begasungseinrichtung 54 fluidisch verbunden. In der Verbindungsrohrleitung 52 ist eine Pumpe 58 vorgesehen. Mit Hilfe der Pumpe 58 wird der die Verbindungsrohrleitung 52 durchströmende Anteil der Schmutzflüssigkeit hochverdichtet der Begasungseinrichtung 54 zugeführt, die außerdem mittels einer nur durch eine Linie angedeuteten Verbindungsleitung 60 mit der Druckgasquelle 50 verbunden ist. In der Begasungseinrichtung 54 wird der die Verbindungsrohrleitung 52 durchströmende Anteil der Schmutzflüssigkeit derart mit Druckgas beaufschlagt, daß sich eine Feinstverteilung von Gasblasen in der genannten Flüssigkeit ergibt. Derartige Begasungseinrichtungen sind bspw. aus der DE 34 19 153 A1, der DE 32 04 415 C2, der DE-PS 24 20 482, der DE-OS 28 50 269 oder der DE 31 11 506 C2 bekannt.

Die Begasungseinrichtung 54 ist mittels einer einfach nur durch eine Linie angedeuteten Rohrleitung 62 mit dem Einlaß 34 der Waschvorrichtung 32 verbunden. In der Rohrleitung 62 ist ein Druckentspannungsventil 56 angeordnet.

Der aus dem Sammler 26 die Verbindungsrohrleitung 52 durchströmende Flüssigkeitsanteil bildet nach der in der Begasungseinrichtung 54 erfolgenden Begasung also in der Waschvorrichtung 32 die Waschflüssigkeit.

Die Wirkungsweise der Filtervorrichtung 10 ist wie folgt:
Mit Schmutzteilchen befrachtete und zu reinigende Schmutzflüssigkeit wird durch den Zulauf 28 in den Sammler 26 eingeleitet. Der größte Anteil dieser Flüssigkeit wird durch die Rohrleitung 24 und durch den mit dieser Rohrleitung 24 verbundenen Einlaß 22 in die Filterbettzone 12 eingeleitet, in der die zu reinigende Schmutzflüssigkeit eine Aufwärtsströmung durchführt. Hierbei werden die Schmutzteilchen von der Flüssigkeit an die die Filterbettzone bildenden Filterpartikel umgelagert, d.h. an den Filterpartikeln angelagert. Die in der Filterbettzone 12 gereinigte Flüssigkeit steigt hoch und bildet über der Filterbettzone 12 die Reinflüssigkeitszone 16. Reinflüssigkeit wird über den Ablauf 20 aus der Filtervorrichtung 10 ausgeleitet, was in Fig. 1 durch den Pfeil 64 angedeutet ist.

Gleichzeitig mit dieser Filtrierung bzw. Reinigung der zu reinigenden Schmutzflüssigkeit erfolgt ein Waschen der die Filterbettzone 12 bildenden, mit den Schmutzteilchen befrachteten Filterpartikel. Zu diesem Zweck wird jeweils ein bestimmter Anteil der mit Schmutzteilchen befrachteten Filterpartikel aus dem unteren Endabschnitt 45 der Filterbettzone 12 durch das Förderrohr 42 der Fördereinrichtung 40 nach oben zur Waschvorrichtung 32 transportiert, die nachfolgend in Verbindung mit Fig. 2 beschrieben wird. Aus Fig. 2 ist der obere Endabschnitt 46 des Förderrohres 42 der Fördereinrichtung 40 ersichtlich, der mit einer sich nach unten konisch erweiternden Lenkeinrichtung 66 ausgebildet ist. Das Förderrohr 42 erstreckt sich konzentrisch durch ein den Einlaß 34 für die Waschflüssigkeit bildendes Rohr 68 hindurch, das oberseitig mittels eines Ringes 70 abgeschlossen ist. Das Rohr 68 ist in der Nachbarschaft seines oberseitigen Abschlusses mit Löchern 72 ausgebildet, durch welche die feinverteilt Gasblasen enthaltende Waschflüssigkeit in radialer Richtung aus dem Einlaß 34 ausströmt. Das ist durch die Pfeile 74 angedeutet. Zum Einlaß 34 bzw. seinem Rohr 68 konzentrisch ist auf Höhe der Löcher 72 ein Zwischenmantel 76 vorgesehen, der düsenförmig nach oben erweitert ist. Der Zwischenmantel 76 ist im Ringraum zwischen dem Einlaß 34 bzw. dem oberen Endabschnitt 46 des Förderrohres 42 und einem Mantel 78 der Waschvorrichtung 32 angeordnet. Der Mantel 78 bildet folglich gleichsam das Außengehäuse der Waschvorrichtung 32. Er ist ober- und unterseitig offen, wobei sein unterer Rand 80 sich in der Reinflüssigkeitszone 16 befindet, wie aus Fig. 1 deutlich ersichtlich ist. Der obere Rand 82 des Mantels 78 ist über dem Spiegel 18 der Reinflüssigkeitszone 16 vorgesehen, so daß sich am unteren Rand 80 ein hydrostatischer Druck ergibt, der eine Reinflüssigkeitsströmung aus der Waschvorrichtung 32 in Richtung des Pfeiles 84 nach unten in die Reinflüssigkeitszone 16 hinein ergibt. In der Waschvorrichtung 32 bewegen sich die mit Schmutzteilchen befrachteten Filterpartikel innerhalb des Zwischenmantels 76 nach unten und werden hierbei von der feinverteilt Gasblasen enthaltenden Waschflüssigkeit, die durch die Löcher 72 austritt, angeströmt. Hierbei ergibt sich eine Umlagerung der Schmutzteilchen von den Filterpartikeln an die Gasblasen, die dann mit den Schmutzteilchen befrachtet als Flotatschlamm zum oberen Rand 82 aufsteigen. Die gereinigten Filterpartikel sinken nach unten zur Filterbettzone 12 (sh. Fig.1). Außerdem ergibt sich im unteren Abschnitt der Waschvorrichtung 32 in an sich bekannter Weise durch Ausnutzung des Flotationsprinzipes Reinflüssigkeit, die infolge des oben erwähnten hydrostatischen Druckes nach unten sinkt, was durch die Pfeile 84 angedeutet ist.

Am oberen Endabschnitt des Mantels 78 der Wasch- bzw. Flotationsvorrichtung 32 ist eine Sammeleinrichtung 85 für den Flotatschlamm aus Schmutzpartikeln, Waschflüssigkeits-Anteil und Gasblasen ausgebildet. Diese Sammeleinrichtung 85 steht über den Reinflüssigkeitsspiegel 18 ausreichend weit über, um zuverlässig auszuschließen, daß Flotatschlamm in die Reinflüssigkeitszone 16 gelangen kann. Ein Rohrstutzen 86 ist dazu vorgesehen, die mit der Fördereinrichtung 40 zur Waschvorrichtung 32 transportierten, mit Schmutzteilchen befrachteten Filterpartikel daran zu hindern, in die Reinflüssigkeitszone 16 zu gelangen. Anstelle eines Rohrstutzens 86 kann bspw. auch eine Prallkappe vorgesehen sein. Der in der Sammeleinrichtung 85 gesammelte Schlamm wird durch den Auslaß 36 aus der Waschvorrichtung 32 ausgeleitet und bspw. in einem Schlammpufferbecken gesammelt.

## Patentansprüche

1. Verfahren zur Filterung einer mit Schmutzteilchen befrachteten Flüssigkeit in einer Filtervorrichtung (10), wobei die Schmutzflüssigkeit durch eine von Filterpartikeln gebildeten Filterbettzone (12) in Aufwärtsrichtung durchgeleitet wird, in welcher die Schmutzteilchen von der Schmutzflüssigkeit an die Filterpartikel angelagert werden, so daß über der Filterbettzone (12) in einer Reinflüssigkeitszone (16) gefilterte Flüssigkeit entsteht, die aus der Filtervorrichtung (10) ausgeleitet wird, und wobei jeweils eine Teilmenge der verschmutzten Filterpartikel aus der Filterbettzone (12) einer in der Reinflüssigkeitszone (16) vorgesehenen Waschvorrichtung (32) zugeführt werden, in welcher die Schmutzteilchen von den Filterpartikeln getrennt und an Gasblasen der Waschflüssigkeit angelagert werden, die gereinigten Filterpartikel zur Filterbettzone (12) absinken und die Schmutzteilchen nach einer Aufwärtsbewegung aus der Waschvorrichtung (32) ausgeleitet werden,
**dadurch gekennzeichnet,**
daß mit Gasblasen versetzte Waschflüssigkeit innerhalb eines in der Waschvorrichtung (32) angeordneten Zwischenmantels (76) zugeführt wird.

2. Verfahren nach Anspruch 1,
**dadurch gekennzeichnet,**
daß als Waschflüssigkeit ein Anteil der zu reinigenden Flüssigkeit verwendet wird.

3. Verfahren nach Anspruch 1,
**dadurch gekennzeichnet,**
daß sich im unteren Abschnitt der Waschvorrichtung (32) nach unten sinkende Reinigungsflüssigkeit bildet.

4. Filtervorrichtung zur Filterung einer mit Schmutzteilchen befrachteten schmutzflüssigkeit, mit einer von Filterpartikeln gebildeten Filterbettzone (12), die an ihrem unteren Endabschnitt (45) einen Einlaß (22) für die Schmutzflüssigkeit aufweist und über welcher sich eine Reinflüssigkeitszone (16) befindet, die oberseitig durch den Ablauf (20) für Reinflüssigkeit bestimmt ist, mit einer Waschvorrichtung (32), die in der Reinflüssigkeitszone (16) angeordnet und zur Reinigugn der durch die Filterung der Flüssigkeit mit Schmutzpartikeln befrachteten Filterpartikel vorgesehen ist, und mit einer für die befrachteten Filterpartikel vorgesehenen Fördereinrichtung (40), die den unteren Endabschnitt (45) der Filterbettzone (12) mit der Waschvorrichtung (32) verbindet, welche einen Einlaß (34) für eine Gasblasen enthaltende Waschflüssigkeit und einen Auslaß (36) für Schmutzteilchen, Gasblasen und Flüssigkeit aufweist und der Einlaß (34) mit einer Begasungseinrichtung (54) verbunden ist, wobei ein Rohr (68) von einem ober- und unterseitig offenen Mantel (78) konzentrisch umgeben ist,
**dadurch gekennzeichnet,**
daß sich die Fördereinrichtung (40) koaxial durch das den Einlaß (34) für die Waschflüssigkeit bildende, oberseitig abgeschlossene, Löcher (72) aufweisende Rohr (68) hindurcherstreckt, durch welche die feinverteilt Gasblasen enthaltende Waschflüssigkeit in radialer Richtung ausströmt und mit den mit Schmutzteilchen befrachteten Filterpartikeln in Kontakt kommt, und daß im Ringraum zwischen dem Rohr (68) und dem Mantel (78) auf Höhe der im Rohr (68) ausgebildeten Löcher (72) ein düsenförmig nach oben erweiterter Zwischenmantel (76) vorgesehen ist.

5. Filtervorrichtung nach Anspruch 4,
**dadurch gekennzeichnet**,
daß der obere Rand (82) des Mantels (78) der Waschvorrichtung (32) über dem Ablauf (20) für die Reinflüssigkeit vorgesehen ist.

6. Filtervorrichtung nach Anspreuch 4 oder 5,
**dadurch gekennzeichnet,**
daß die mit dem Einlaß (343) der Waschvorrichtung (32) verbundene Begasungseinrichtung (54) mit dem Einlaß (22) für die Schmutzflüssigkeit und mit einer Druckgasquelle (50) verbunden ist.

7. Filtervorrichtung nach Anspruch 6,
**dadurch gekennzeichnet,**
daß die mit der Begasungseinrichtung (54) verbundene Druckgasquelle (50) von der mit der Fördereinrichtung (40) für die mit Schmutzteilchen befrachteten Filterpartikel verbundenen Druckgasquelle (50) gebildet ist.
